Europäisches Patentamt

European Patent Office

Office européen des brevets

(11) Publication number: **0 359 392**
**A1**

## EUROPEAN PATENT APPLICATION

(21) Application number: 89308118.2

(22) Date of filing: 10.08.89

(51) Int. Cl.5 **F16L 1/26 , F16L 1/12 , F16L 55/18**

(30) Priority: 12.08.88 GB 8819241

(43) Date of publication of application:
21.03.90 Bulletin 90/12

(34) Designated Contracting States:
**DE FR GB NL**

(71) Applicant: Cameron Iron Works USA, Inc. (a
Delaware corporation)
**P.O. Box 1212**
**Houston Texas 77251-1212(US)**

(72) Inventor: **Smith, Derek**
**9, The Paddock**
**Hemsby,Norfolk(GB)**

(74) Representative: **Smith, Norman Ian et al**
**F.J. CLEVELAND & COMPANY 40-43**
**Chancery Lane**
**London WC2A 1JQ(GB)**

(54) **Pipeline repair system.**

(57) A method of repairing a subsea pipeline which
includes the steps of removing the damaged section
of pipeline (10) and preparing the remaining ends
(11,12) thereof for receiving adapter sleeves, posi-
tioning adapter sleeves (14) of a size which fit rela-
tively closely around the exterior of the prepared end
of the pipeline and have flanges of a size larger than
would normally be used with the size of the tubular
portion of the adapter sleeves,cold forging the pre-
pared ends into tight gripping and sealing engage-
ment with the tubular portions of the adapter sleeves
and connecting a section of pipeline having flanges
suitable in size for connecting to the adapter flanges
to provide a complete connection between the ends
of the pipeline. The adapter sleeve includes a tubu-
lar body and a connecting flange secured to the
tubular body which is larger than normally used with
a tubular body of the size of the adapter sleeve
tubular body, and the adapter sleeve tubular body
has an internal configuration suitable for gripping
and sealing the exterior of the pipeline ends which
are cold formed therein.

FIG. 10

## Pipeline Repair System

### Background

This invention relates to an improved method for the repair of subsea pipelines and to an improved adapter sleeve used in such method.

When a subsea pipeline is damaged the repair technique involves cutting a section of the pipeline which includes the damaged portion, removing it, and then replacing the removed section with a new section of pipeline. One known method of connecting the new section of pipeline is by means of welding. This technique involves the use of divers to carry out the welding process.

Another known technique is that known as a cold forging technique. In this technique, once the damaged section has been removed, a sleeve is attached around each open end of the pipeline. Each sleeve has an externally formed hub with a precisely defined profile which can be engaged by connection means such as a collet connector. Each sleeve also has internally formed teeth which can engage the exterior of each pipeline end. To complete the repair a new section of pipeline, each end of which carries a collet type connector, is located between the two pipeline ends and connected in position by actuation of the collet connectors which engage perspective profiled hubs on the two sleeves.

The sleeves are mounted on the end of the pipeline by means of a running and forging tool. The running and forging tool includes a packer which can be extended to locate inside the end section of a pipeline, and a collet type connector which can engage the profiled hub on a sleeve. In use the packer is extended to locate within the pipeline end, the packer element is hydraulically expanded slightly to engage the inside of the pipe thereby correctly locating the tool and sleeve relative to the pipeline end, and then the running and forging tool is drawn hydraulical ly towards the pipeline end so that the sleeve locates around the end portion of the pipeline. The pipeline is then forged hydraulically into contact with the teeth on the interior of the sleeve. When both sleeves have been mounted, the running and forging tool is removed and the new section of pipeline is then located in position as described above.

Pipeline companies use a wide variety of pipeline diameters. Each diameter of pipeline requires its own matching connectors. Thus, in order to ensure that there is the capability of carrying out repairs to all such pipelines it is necessary to have a large stock of connectors which have diameters appropriate to the diameters of pipeline which are in use. This is expensive.

### Summary

In general outline one aspect of the present invention provides an adaptor for use in a repair technique of the type described above, the adaptor being for mounting in a connector which can be secured to a pipeline and has a through bore for communication with the pipeline and one or more connecting elements which can engage a profiled hub, said adaptor having a through bore of a given diameter and means enabling it to be secured within the bore of the connector. The adaptor may be securable within the bore of the connector by means of a screw connection. The invention also provides a connector in combination with one or more said adapters.

A further aspect of the invention relates to the sleeves with the profiled hub. This aspect of the invention proposed the provision of a plurality of such sleeves in which the outer diameter of the hub is a constant, but in which the sleeve bores have different diameters. By means of such arrangement a given running and forging tool can be used in the repair of pipelines with a range of diameters. Al that is required is to select the sleeve having the appropriate internal diameter for the pipeline under repair. An alternative is to provide an adaptor which can be located around a sleeve end to provide the appropriate hub size for engagement by the running and forging tool connector. The adaptor may comprise an annular adaptor which is split diametrically for location around the sleeve.

Preferably the connectors are collet type connectors.

An object of the present invention is to provide an arrangement which allows a given connector to be used with a number of different diameter pipelines.

Another object is to provide an improved method of repairing damaged subsea pipelines which does not require stocking repair sections of all possible sizes.

A further object is to provide an improved adapter sleeve which allows the use of connecting pipeline sections to be used of a size different than the size of the pipeline.

A further object is to provide an improved method of repairing damaged subsea pipelines which greatly simplifies the repair work and does not require the use of divers in the subsea location.

### Brief Description of the Drawings

The invention will be described now by way of example only, with particular reference to the accompanying drawings.

In the drawings:

Figures 1 to 3 illustrate a known pipeline repair technique;

Figures 4 to 8 illustrate a running and forging tool and its method of operation in such a repair technique;

Figure 9 is a sectional view of a running and forging tool of the type shown in Figure 1;

Figure 10 is a sectional view illustrating apparatus in accordance with the present invention;

Figures 11A and 11E illustrate the operation of apparatus in accordance with the present invention, and

Figure 12 shows a modified forth of the present invention.

## Description of the Preferred Embodiments

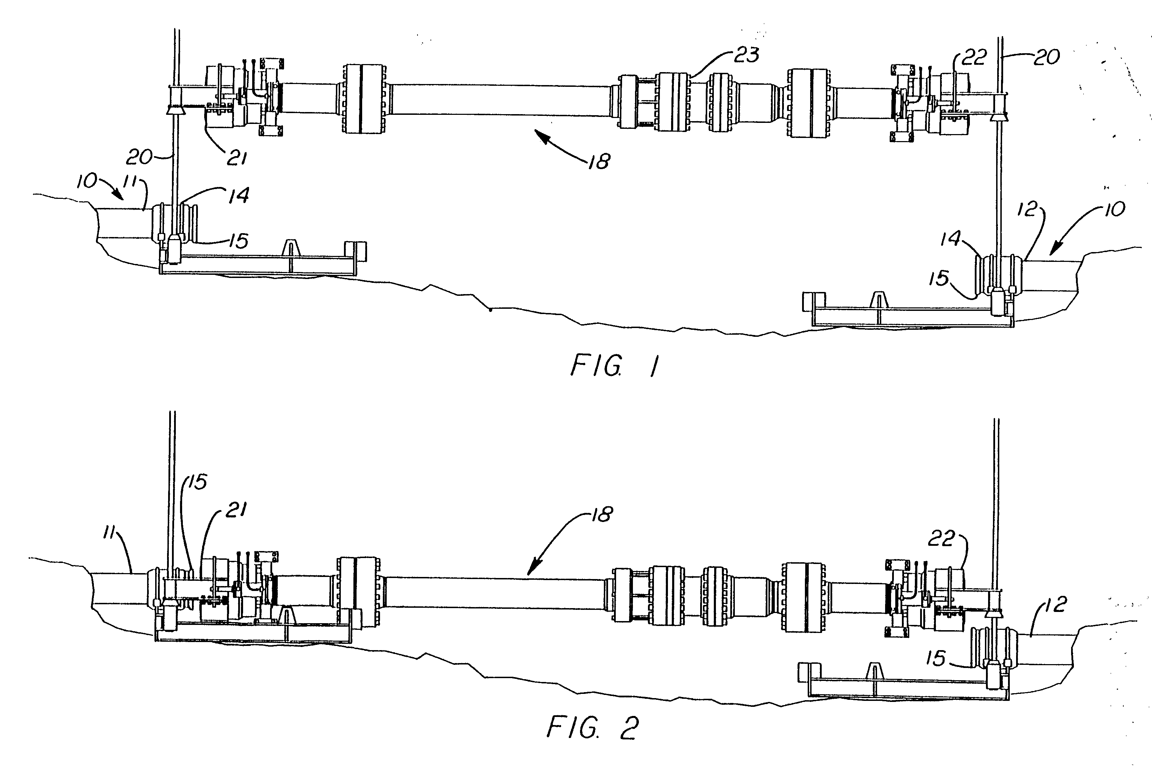

Figure 1 to 3 show a typical sequence of events during the repair of a damaged pipeline 10. The damage section of a pipeline is cut away and removed to leave opposed ends 11, 12 of the undamaged pipeline. A sleeve 14 is attached to each end 11, 12 as shown in Figure 1. The manner in which the sleeves are attached will be described below. Each sleeve has a hub portion 15 with a precisely defined profile for engagement by a collet connector.

A new section of pipeline shown generally at 18 is prepared on the surface and then lowered towards the pipeline ends 11, 12 by the use of guidelines 20. The new section of pipeline has on each end a collet connector 21, 22. Intermediate its ends the new section of pipeline has a length compensating element shown at 23 whose function will be apparent to those skilled in the art.

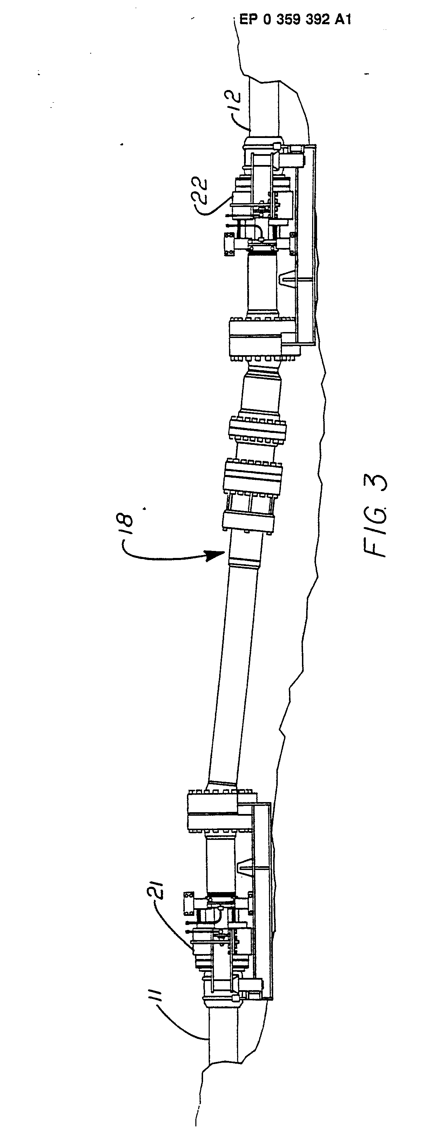

The new section of pipeline is lowered to the position shown in Figure 2 of the drawings and in this position the collet connector 21 is actuated to engage the hub 15 on the sleeve 14 on the end 11 in a manner which will be known to those skilled in the art. Similarly as shown in Figure 3 the other end of the new section of pipeline is brought into alignment with the pipeline end 12 and the collet connector 22 actuated to engage the hub on the sleeve 14 carried by that pipeline end.

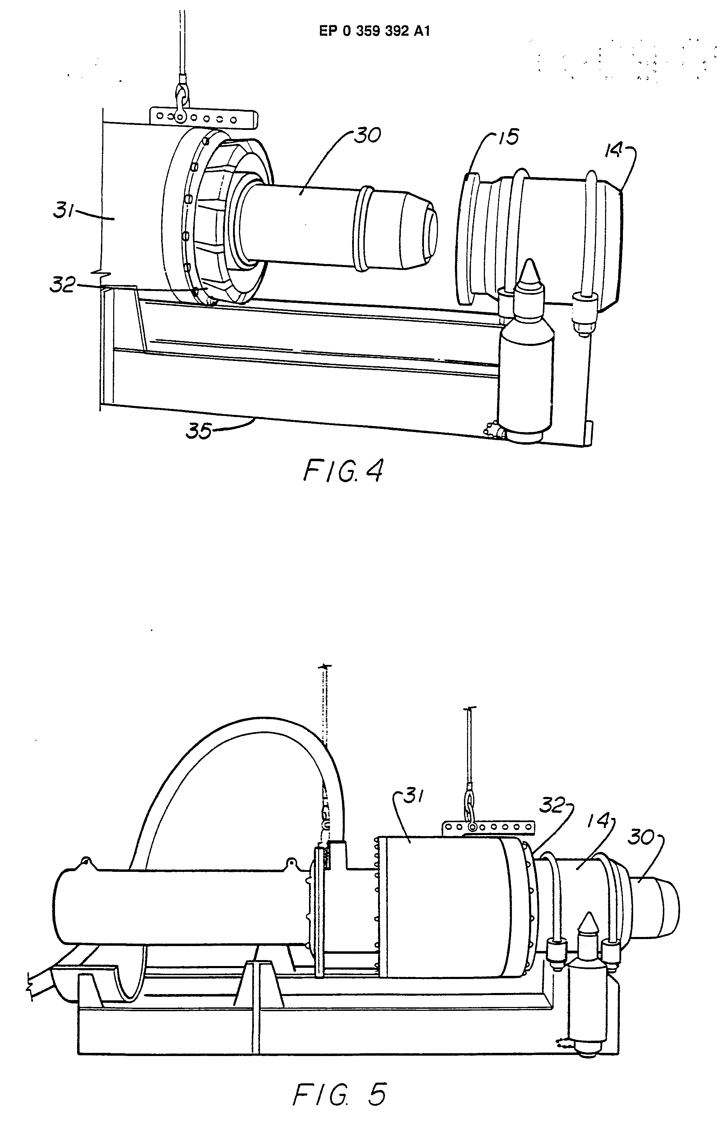

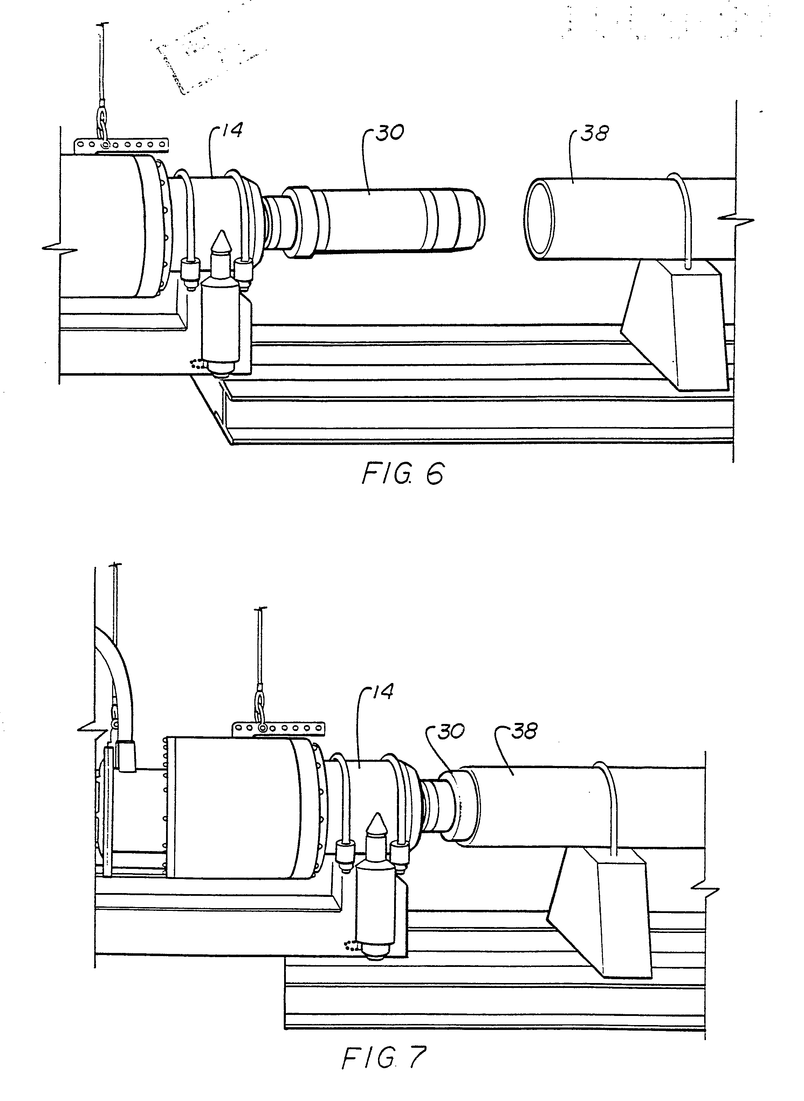

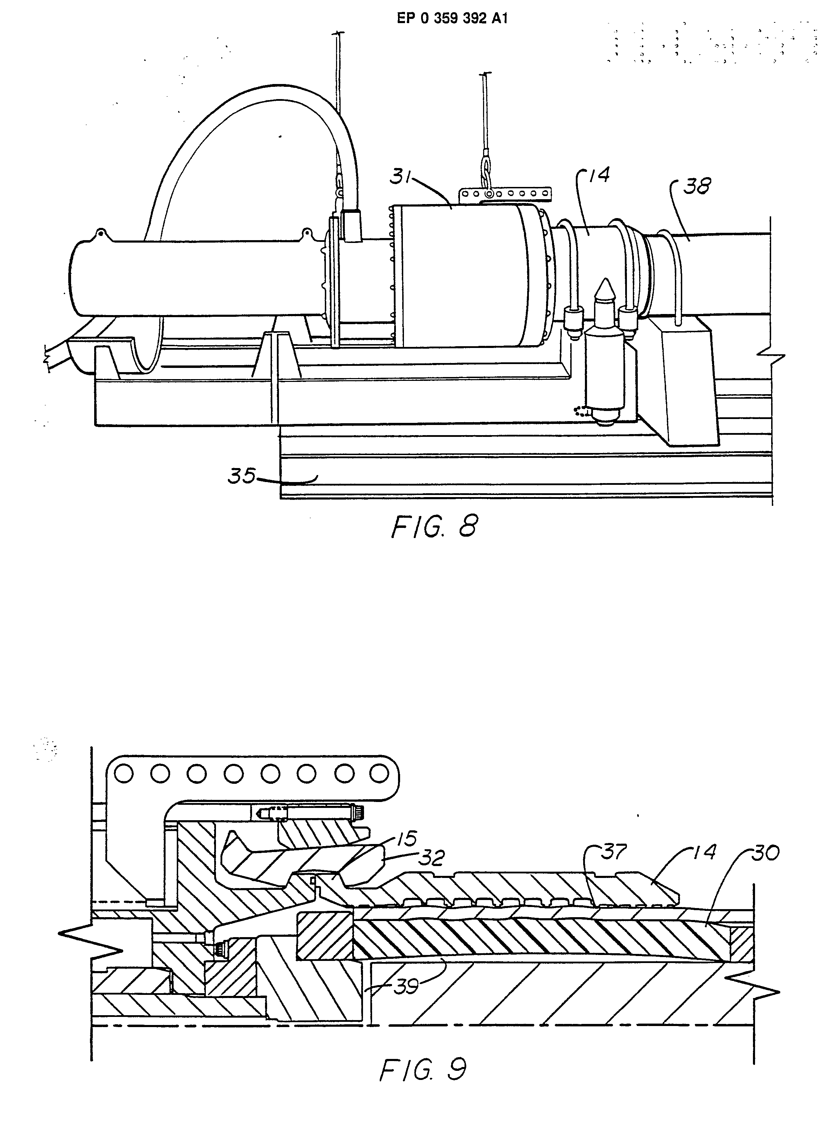

It will be apparent from the above that the first operation after the damaged pipeline section has been removed is the location of the sleeves 14 on the pipeline ends 11 and 12. One known way of carrying out this operation is to use a suitable running and forging tool of the type shown in Figure 4 of the drawings. This tool comprises a packer element 30 which protrudes forwardly from a running tool 31 and which is coaxially mounted with a collet type connector 32. The packer element is carried on one end of a rod which can be actuated hydraulically to extend and retract the packer element 30. In use, the running and forging tool is located on a base element 35 as shown in Figure 4 which also carries a sleeve 14 which is to be connected to a pipeline end. The hub is shown at 15. Additionally the interior of the sleeve has a plurality of coaxially spaced teeth which extend circumferentially around the inner wall of the sleeve. The collet connector 32 is then actuated as shown in Figure 5 so that the collet fingers engage the hub 15. The running and forging tool and base element are then located adjacent a pipeline end section 38 and the packer 30 is extended from the running and forging tool as shown in Figure 6 of the drawings. The packer is inserted into the pipe end as shown in Figure 7. The packer element is then hydraulically inflated slightly to remove any ovality in the pipe end and to align the running and forging tool correctly with respect to the pipe end. The hydraulic cylinder of the running and forging tool is then actuated to pull the base 35 and running and forging tool towards the pipeline end so that the sleeve 14 locates around the pipe end as shown in Figure 8 of the drawings. Hydraulic pressure (typically 20,000 psi) is then applied to the packer elements to force the steel pipe outwardly into contact with the teeth on the internal surface of the sleeve 14. This extends the end portion of the pipeline beyond its elastic limit. It also stretches the sleeve 14, but not beyond its elastic limit so that when the pressure is released the sleeve 14 can relax and tightly grip the pipeline so that a metal-to-metal seal is formed between the two elements.

The collet connector elements 32 are then opened and the running and forging tool removed. A similar operation is then carried out on the other pipeline end section to locate the other sleeve thereon.

Figure 9 is a section through the running and forging tool in the position which is shown in Figure 8. The collet fingers are shown at 32, the packer at 30, the sleeve at 14 and the teeth on the internal surface of the sleeve at 37. The packer 30 is expanded hydraulically using hydraulic fluid which is shown at 39.

Once the sleeves 14 have been located as described the new pipeline section can be connected as described earlier with reference to Figure 1 to 3.

It is quite common for pipelines to have a wide variety of diameters, a typical range starting with a diameter of 10 inches and increasing in steps of 2 inches to an upper diameter of 36 inches. Each pipeline diameter requires matching collet connector so to cater for repair to such a wide range of pipeline diameters, a large number of collet connectors are required. For the repair technique described above, three collet connectors are required for each pipeline diameter in order to carry out repair. The provision of such a vast number of collet connectors is very expensive.

In the present invention we propose an improvement to the above arrangement which enables a collet connector of a given size to be used with a range of pipeline diameters. In the improved arrangement we propose providing sleeves 14 which have a range of internal diameters, but which have a common hub profile and diameter. Thus, for example it is possible to provide a series of sleeves having internal diameters of 10 inches, 12 inches, 14 inches, 16 inches, and 18 inches all of which have the same diameter hub so that they can be engaged by the same collet connector on the running and forging tool. This enables, for example, an 18 inch collet connector on a running and forging tool to be used in the repair of pipelines having the abovementioned range of diameters.

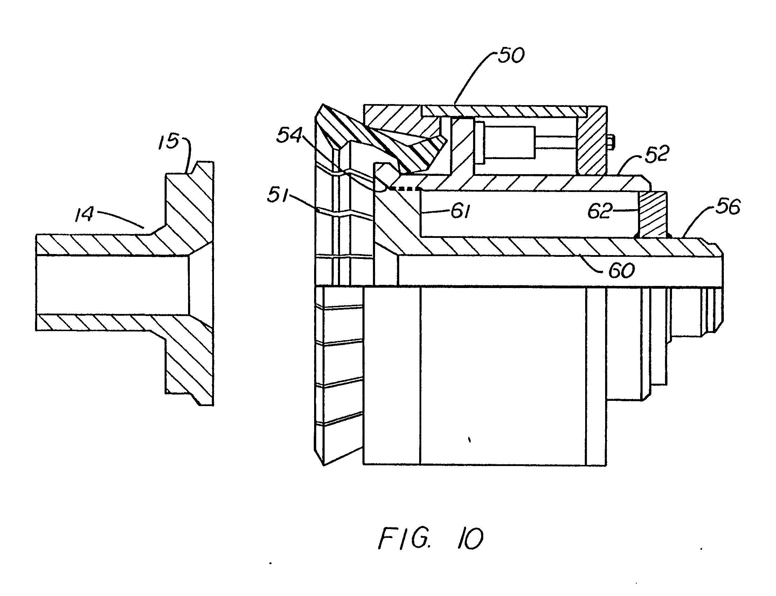

Another aspect of the present modification concerns an adaptor for use with each of the collet connectors mounted on the end of the new pipeline section shown generally at 18 in Figure 1. The modification is illustrated schematically in Figure 10 of the drawings which is a part-sectional view of such a collet connector. The connector comprises a housing 50, collet fingers 51 and a tubular element 52 which defines the usual bore of the collet connector. In the present modification a small axial portion of the element 52 has been cut away and threaded at 54 so that it can receive an adaptor element 56 which is screwed into the bore of the collet connector so that it engages the threaded portion 54. The adaptor comprises a tubular portion 60 defining a through bore of a selected diameter and spaced annular flanges 61, 62 which locate the adaptor in the connector bore. The flange 61 is threaded to engage the threaded portion 54. It will be appreciated that adapters of different internal diameters can be provided so that they can match the internal diameter of the pipeline which is being repaired. In this way a collet connector of a given size can be adapted of use with a range of pipeline diameters by selection of the appropriate adaptor 56 so that a different collet connector does not have to be provided for each different pipeline diameter. This reduces considerably the number of different collet connectors which need to be retained in stock to cover the range of pipeline diameters. A range of sleeve diameters obviously require to be held and also a range of adaptor elements 56, but these are considerably less expensive than complete collet connector.

It is also necessary to provide a corresponding range of packer elements 30 for the running and forging tool shown in Figure 4 of the drawings.

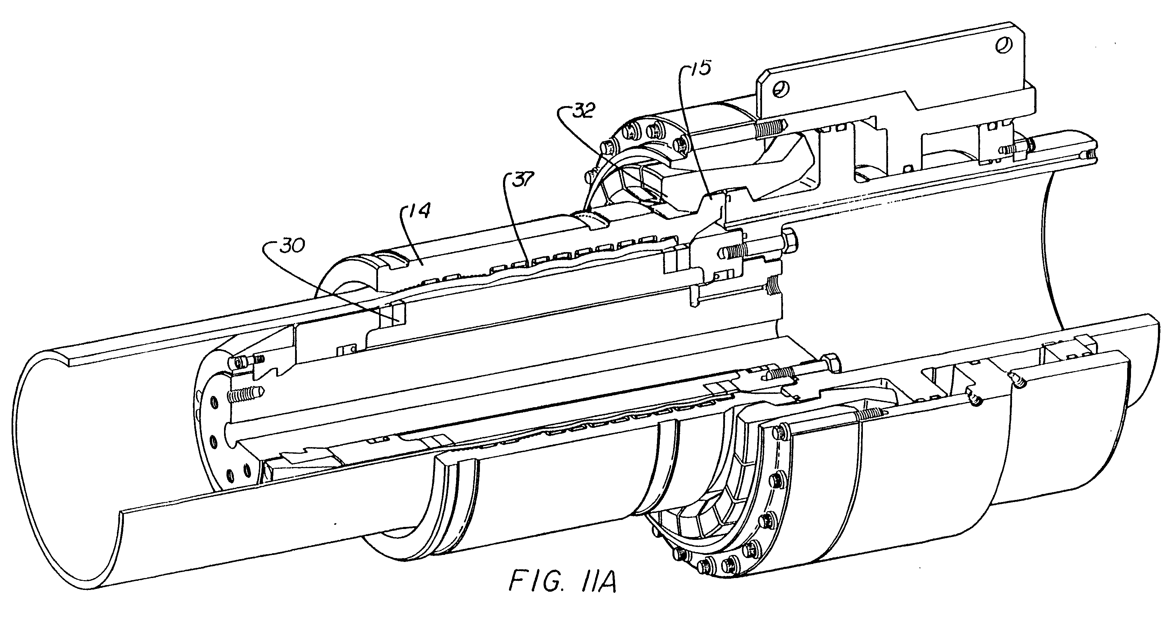

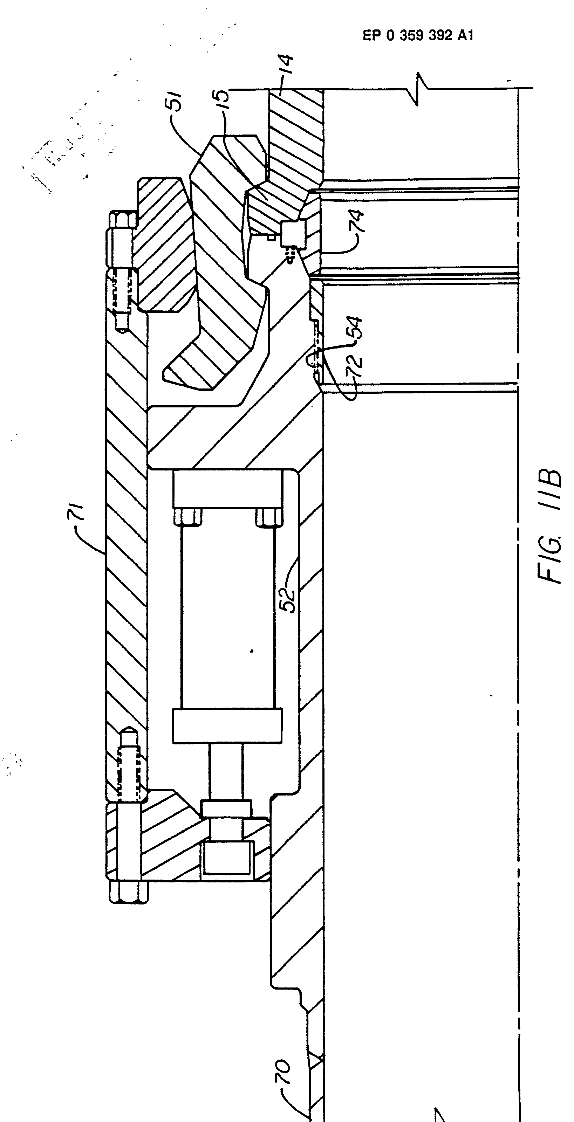

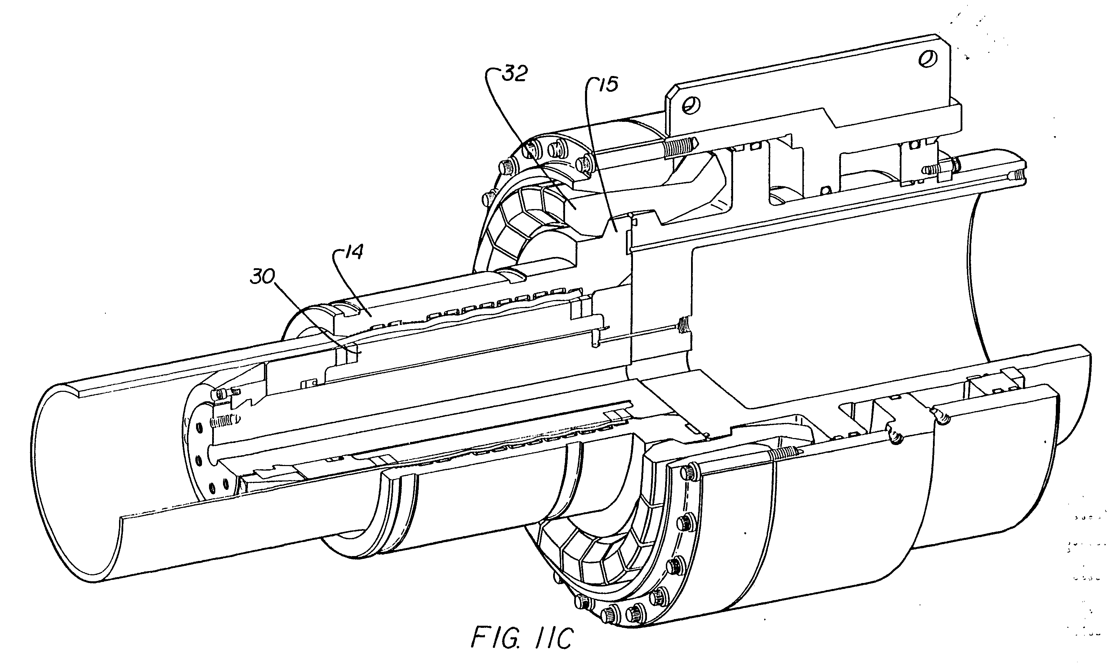

Figures 11A to 11E illustrate the way in which the arrangement operates. Figure 11A illustrates a running and forging tool with an 18 inch collet connector used to mount a sleeve to an 18 inch pipeline. Figure 11B shows the connector of a new section 70 of an 18 inch pipeline to a pipeline end to which a sleeve 14 has been secured. The new section 70 carries an 18 inch collet connector 71 which hence does not require an adaptor element. However the thread protector 72 is located in the threaded section 54 to protect the threads and provide a smooth bore surface. 74 is an AX gasket which is used to seal the joint between the new and old pipeline sections.

Figure 11C is a view similar to Figure 11A for a running and forging tool with an 18 inch collet connector locating a 14 inch sleeve on a 14 inch pipeline. Figure 11D is a view similar to Figure 11B but showing an 18 inch collet connector with a 14 inch adaptor 56. Figure 11E is a view similar to Figure 11C but for a 12 inch pipeline.

It will be appreciated that in a similar manner a 36 inch collet connector could cover a pipeline diameter range of 20 inches to 36 inches and a 12 inch collet connector the range of 4 inches to 12 inches.

In the above example 3 sizes of collet connector (12 inch, 18 inch, 36 inch) can be used to cover the diameter ranges from 4 inches to 36 inches.

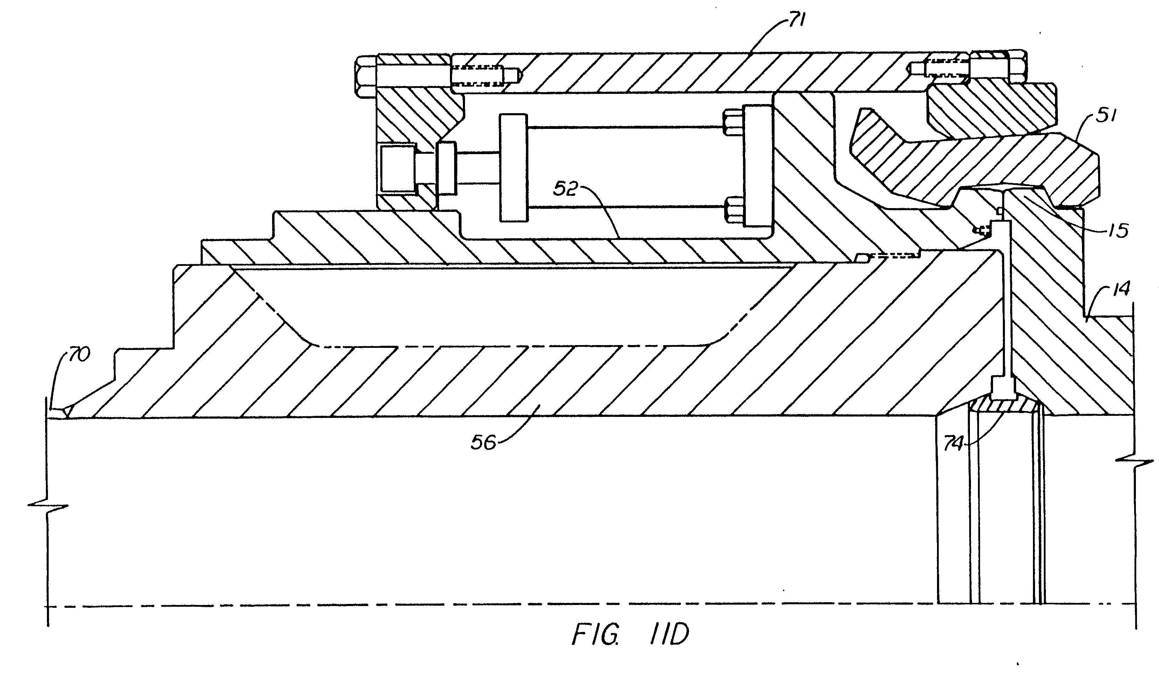

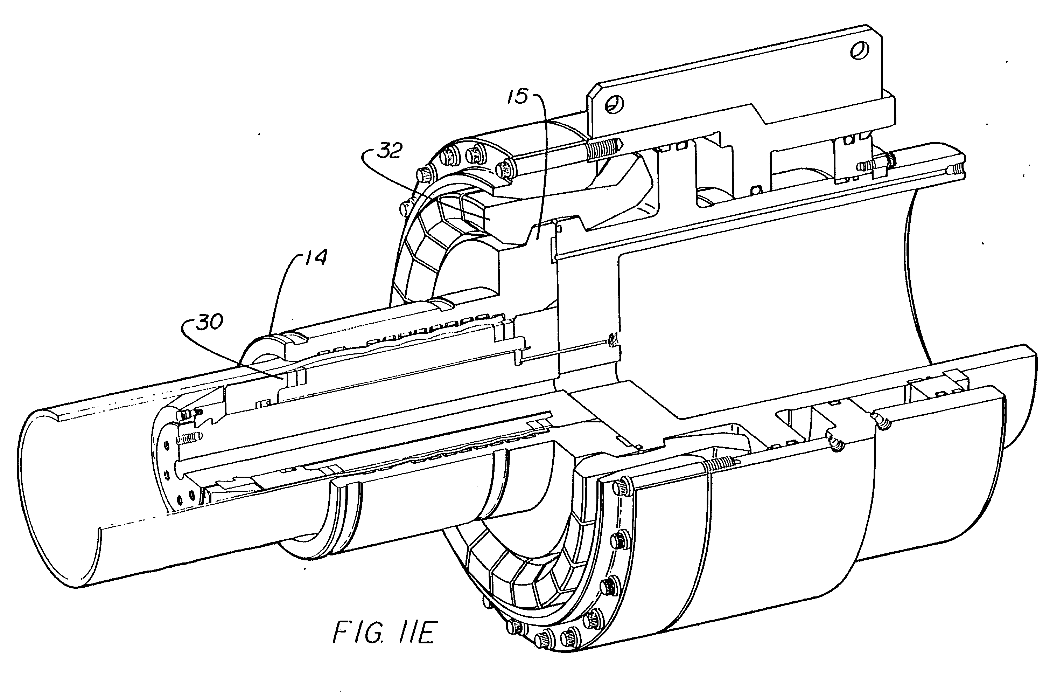

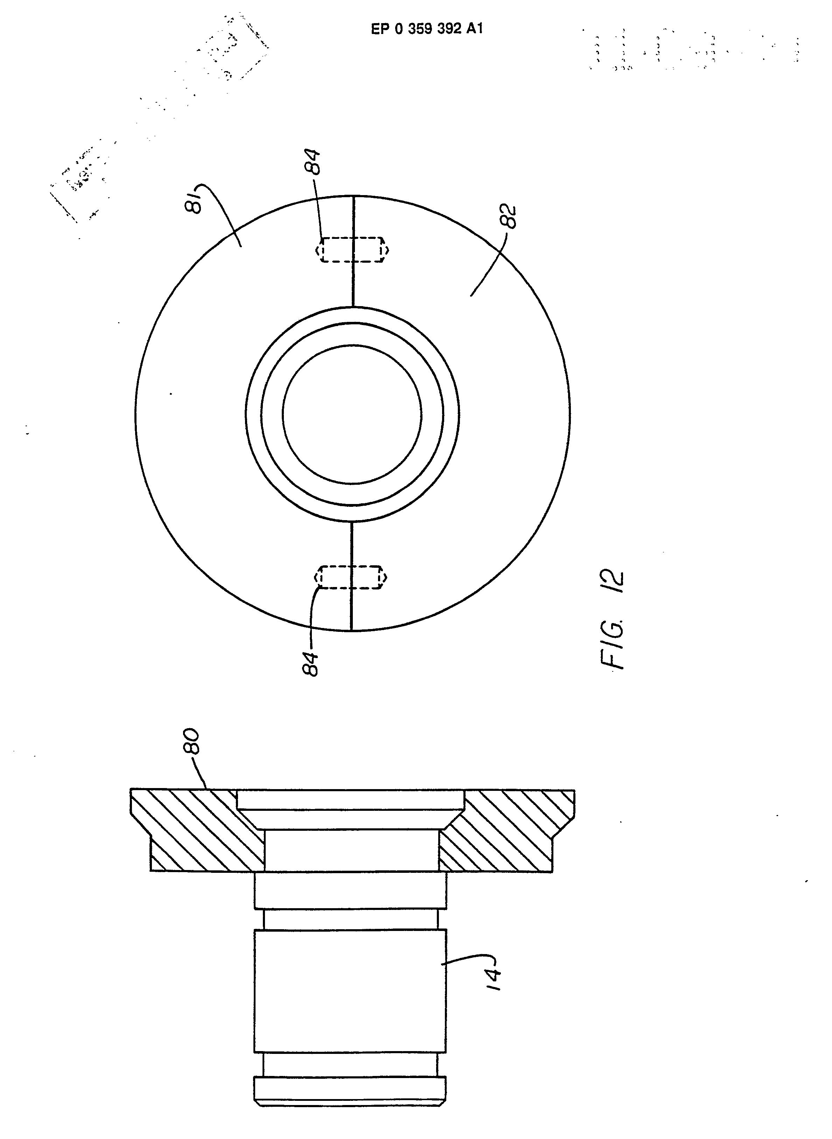

If a pipeline operator uses a pipeline which is say 14 inches diameter and wishes to use two 14 inch collet connectors to connect in the new section of pipe this can be achieved with an arrangement of the type shown in Figure 12.

The sleeve 14 to be connected on each open end of the pipeline will require a 14 inch hub so that it can be engaged by a 14 inch collet connector. To enable the sleeve to be mounted on the pipeline end using say an 18 inch connector on the running and forging tool, a split hub adaptor 80 can be employed. The adaptor comprises two semi-annular elements 81, 82 which can be located together around the sleeve end to form an 18 inch hub for engagement by an 18 inch connector on a running and forging tool. The elements 81, 82 can be held together by dowel pins 84. Once the sleeves 14 have been located on the pipeline ends, the hub adaptor 80 can be removed so that the new section of pipeline can be connected using 14 inch connectors. This type of arrangement permits a given running and forging tool to forge a wide range of sleeves onto pipeline ends.

## Claims

1. In combination with an underwater cold forging tool which is adapted to radially deform the end of an underwater pipeline outward into engagement with a sleeve having a flange for connection to other pipeline sections of an adapter sleeve comprising

a tubular body having an internal diameter adapted to receive the end of the pipeline which is to be radially deformed therein, and

a flange thereon which is adapted to mate with the connection of the cold forging tool and with other pipeline sections wherein said flange connects to other flanges having a size which is different from the flange size normally used with a tubular body having the size of said tubular body.

2. An adapter sleeve according to claim 1 wherein said tubular body includes

an internal configuration of lands and grooves against which said pipeline end is to be deformed into tight gripping and sealing engagement.

3. An adapter sleeve according to claim 2 including

an volume compensating material positioned in the grooves within said tubular body to hydraulic lock during the cold forging of the pipeline end into said tubular body.

4. An adapter sleeve according to claim 1 wherein the size of said tubular body is smaller than the size of the tubular body normally associated with said flange.

5. An adapter sleeve according to claim 1 wherein said flanges are collet flanges.

6. A method of repairing a damaged subsea pipeline including the steps of

removing the broken section and preparing the ends of the remaining pipeline for cold forging,

positioning an adapter sleeve having a tubular portion and a flange around each of the prepared ends of the pipeline, said adapter sleeve flange being of a size different from and larger than the flange normally associated with a pipe of the size of the tubular portion of the adapter sleeve,

cold forging the prepared pipeline ends into their respective sleeve adapters, and

connecting a section of pipeline having end flanges of a size for connecting to the adapter sleeve flanges with a section of pipeline between the end flanges to complete the connection between the ends of the pipeline.

7. The method of repairing a damaged subsea pipeline according to claim 6 wherein the adapter flanges and the pipeline flanges are collet flanges and the pipeline section carries collet connectors.

FIG. 1

FIG. 2

EP 0 359 392 A1

FIG. 3

EP 0 359 392 A1

FIG. 4

FIG. 5

_14_    _30_    _38_

FIG. 6

_14_    _30_    _38_

FIG. 7

FIG. 8

FIG. 9

FIG. 10

EP 0 359 392 A1

FIG. IIA

FIG. 11B

EP 0 359 392 A1

FIG. IIC

FIG. IID

FIG. 11E

EP 0 359 392 A1

FIG. 12

EP 0 359 392 A1

| DOCUMENTS CONSIDERED TO BE RELEVANT | | | EP 89308118.2 |
|---|---|---|---|
| Category | Citation of document with indication, where appropriate, of relevant passages | Relevant to claim | CLASSIFICATION OF THE APPLICATION (Int. Cl.×)5 |
| A | DE - A1 - 2 615 315 (MANNESMANN AG) * Totality * -- | 1,2 | F 16 L 1/26 F 16 L 1/12 F 16 L 55/18 |
| A | EP - A2 - 0 158 455 (CAMERON IRON WORKS. INC.) * Totality * -- | 1,5 | |
| A | US - A - 4 730 853 (GJESSING) * Totality * -- | 1,5 | |
| A | US - A - 4 372 584 (MILLER) * Totality * ---- | 1,5 | |
| | | | TECHNICAL FIELDS SEARCHED (Int. Cl.×)5 |
| | | | F 16 L 1/00 F 16 L 35/00 F 16 L 55/00 |
| The present search report has been drawn up for all claims | | | |

| Place of search | Date of completion of the search | Examiner |
|---|---|---|
| VIENNA | 09-10-1989 | SCHUGANICH |